# FASCICULE DE BREVET EUROPEEN

(11) **EP 0 687 626 B1**
(45) Date de publication et mention de la délivrance du brevet: **02.09.1998**
(21) Numéro de dépôt: 95401366.0
(22) Date de dépôt: 13.06.1995
(51) Int. Cl.: B64C 39/02, F41G 7/30

(54) **Système d'observation par aéronef télépiloté**
Beobachtungsystem mit einem ferngelenkten Flugzeug ausgerüstet
Observation system utilizing a remote controlled aircraft

(30) Priorité: 15.06.1994 FR 9407298
(43) Date de publication de la demande: 20.12.1995
(73) Titulaire: AEROSPATIALE Société Nationale Industrielle, 75781 Paris Cédex 16 (FR)
(72) Inventeur: Ernoult, Philippe, F-78000 Versailles (FR); Outters, Xavier, F-19800 Gimel (FR); Panot, Christian, F-78000 Versailles (FR)
(74) Mandataire: Dubois-Chabert, Guy

(56) Documents cités:
- EP-A- 0 148 704
- US-A- 3 072 904
- US-A- 3 761 817

## Description

L'invention concerne un système d'observation utilisant un aéronef léger télépiloté pour effectuer des missions de reconnaissance et d'observation de moyennes portées (quelques dizaines de kilomètres) depuis une station de commande généralement terrestre.

Un tel système d'observation est utilisé notamment dans le domaine militaire, pour localiser des objectifs à distance sans risque de pertes humaines.

Comme l'illustre notamment le document FR-A-2 257 971, l'aéronef sans pilote, généralement appelé drone, dispose de moyens d'observation tels qu'une caméra vidéo et de moyens de pilotage permettant de contrôler sa trajectoire.

Par ailleurs, la station de commande est équipée de moyens de visualisation tels qu'un écran vidéo sur lequel on affiche l'image vidéo fournie par la caméra. Une carte géographique de la région survolée, sur laquelle un index indique la position de l'aéronef, peut aussi apparaître sur l'écran. La station de commande est également pourvue de moyens de télécommande permettant d'agir à distance sur les moyens de pilotage de l'aéronef pour en modifier la trajectoire.

Dans les systèmes d'observation existants tels que celui qui est décrit dans le document FR-A-2 557 971, les transmissions entre l'aéronef et sa station de commande s'effectuent par une liaison hertzienne. A cet effet, l'aéronef comme la station de commande sont équipés de moyens d'émission-réception par voie hertzienne.

L'utilisation d'une liaison hertzienne pour assurer la communication entre l'aéronef sans pilote et sa station de commande présente cependant des inconvénients notables.

Ainsi, lorsque le relief de la région située entre la station de commande et l'aéronef sans pilote est tourmenté, les communications par voie hertzienne peuvent être interrompues. De plus, quelle que soit la nature du terrain, les communications par voie hertzienne peuvent être brouillées. Dans les deux cas, cela peut avoir pour conséquences de rendre indéchiffrables les informations transmises et de conduire à une perte de contrôle de l'aéronef.

L'utilisation d'une liaison par voie hertzienne entre l'aéronef sans pilote et sa station de commande a aussi pour inconvénient de faciliter le repérage de l'aéronef, pouvant conduire à sa destruction, puisque les ondes électromagnétiques servant à la transmission peuvent être captées par des radars ennemis.

Dans un autre domaine qui est celui du guidage de certains engins volants, il est connu de transmettre les informations entre l'engin et la station de commande par une liaison filaire telle qu'une liaison par fibre optique.

Une telle liaison filaire permet de supprimer les inconvénients précités de la transmission par voie hertzienne.

Cependant, elle aurait pour inconvénient, si elle était appliquée à la transmission d'informations entre une station de commande et un aéronef sans pilote destiné à revenir jusqu'à cette station en fin de mission, de nécessiter une longueur de fibre ou de fil sensiblement double de la distance qui sépare la station de commande de l'objectif. Etant donné que la longueur de fibre ou de fil bobinée avant le départ de l'aéronef est limitée par l'encombrement de la bobine de fibre ou de fil, la portée d'un système d'observation qui utiliserait une liaison filaire serait donc relativement limitée.

L'invention a principalement pour objet un système d'observation conçu pour présenter à la fois les avantages des système utilisant une liaison par voie hertzienne et les avantages des systèmes utilisant une liaison filaire entre l'aéronef et la station de commande, sans que la portée du système ne soit limitée à environ la moitié de la longueur de la fibre ou du fil, sans qu'une interruption de la transmission par voie hertzienne due au relief ou à un brouillage externe fasse perdre le contact avec l'aéronef et sans que les transmissions par voie hertzienne facilitent le repérage de l'aéronef.

Dans la définition la plus générale de l'invention, ces objectifs sont atteints au moyen d'un système d'observation par aéronef télépiloté, comprenant :
- un aéronef sans pilote, équipé de moyens d'observation, de moyens de pilotage, et de premiers moyens d'émission-réception par voie hertzienne ; et
- une station de commande, équipée de moyens de visualisation, de moyens de télécommande, et de deuxièmes moyens d'émission-réception par voie hertzienne ;
caractérisé par le fait qu'il comprend de plus une liaison filaire reliant initialement l'aéronef à la station de commande pour transmettre normalement aux moyens de pilotage de l'aéronef des ordres de pilotage délivrés par les moyens de télécommande qui équipent la station de commande.

Un tel système permet d'utiliser la transmission par la liaison filaire pendant le voyage aller de l'aéronef, incluant la phase d'observation proprement dite. Cependant, l'objectif observé peut être situé à une distance sensiblement supérieure à la moitié de la longueur de la fibre ou du fil et aller jusqu'à la longueur totale de ce dernier.

A la fin du trajet aller et du trajet d'observation de l'aéronef, la fibre peut être cassée. Le retour de l'aéronef s'effectue alors de façon programmée vers la station de commande. La liaison par voie hertzienne est alors utilisée uniquement dans l'environnement immédiat de la station de commande, pour permettre l'atterrissage télépiloté de l'aéronef.

De cette manière, la portée du système d'observation est seulement limitée par la longueur totale de la fibre ou du fil. Etant donné que le pilotage par voie hertzienne est limité à la proximité immédiate de la station de commande, tout risque d'interruption de transmission due aux accidents de terrain ou au brouillage est supprimé et la discrétion électromagnétique est assurée.

En outre, la présence conjointe d'une transmission par voie hertzienne et d'une transmission par liaison filaire entre l'aéronef et la station de commande assure une redondance qui accroît sensiblement les chances de succès de la mission du système d'observation.

Pour permettre son utilisation de la manière qui vient d'être brièvement décrite, l'aéronef est équipé préférablement de moyens de commutation automatique qui transmettent aux moyens de pilotage des ordres de pilotage délivrés par les moyens de télécommande, respectivement au travers de la liaison filaire lorsque cette liaison est intacte et par voie hertzienne lorsque la liaison filaire est rompue.

De plus, l'aéronef est équipé avantageusement de premiers moyens de calculs programmés qui enclenchent automatiquement des moyens de pilotage automatique lorsque la liaison filaire est rompue, de façon à assurer un retour programmé de l'aéronef vers la station de commande.

Les premier et deuxième moyens d'émission-réception par voie hertzienne ont alors avantageusement une portée sensiblement inférieure à une longueur maximale de la liaison filaire, de façon à permettre un atterrissage de l'aéronef télécommandé par voie hertzienne.

Dans une forme de réalisation préférentielle de l'invention, les moyens de pilotage automatique agissent sur les moyens de pilotage de façon à assurer une stabilisation de l'aéronef en altitude et en cap, et de façon à assurer une correction automatique de trajectoire en cap, en réponse à des informations de position délivrées par des moyens indicateurs de position et de vitesse, embarqués sur l'aéronef.

De préférence, le système d'observation selon l'invention comprend des moyens de détection d'une longueur de liaison filaire restante, embarqués par exemple sur l'aéronef. Ces moyens de détection délivrent une information de longueur restante transmise aux moyens de visualisation pour y être affichée. Cette information de longueur restante permet à un opérateur d'orienter l'aéronef vers la station de commande, à l'aide des moyens de télécommande, avant une rupture de la liaison filaire.

A cet effet, le système d'observation selon l'invention comprend de préférence des moyens de détection d'une rupture de la liaison filaire, avantageusement embarqués sur l'aéronef.

Dans la forme de réalisation préférentielle de l'invention, les moyens d'observation comprennent une caméra vidéo. Cette caméra est équipée de moyens de réglage de distance focale et de moyens de réglage d'élévation. Les moyens de télécommande délivrent alors, de plus, des ordres de commande de ces moyens de réglage de distance focale et d'élévation, aptes à être transmis par voie hertzienne et par la liaison filaire.

A cet effet, les moyens de visualisation comprennent un moniteur vidéo pourvu d'un écran partagé en au moins deux régions, ainsi que des deuxièmes moyens de calcul programmés, associés au moniteur vidéo. Au moins une carte géographique d'une zone d'observation à survoler, peut alors être mémorisée dans ces deuxièmes moyens de calcul, pour être affichée sur une première des régions de l'écran, avec un index indiquant la position de l'aéronef. L'image vidéo fournie par la caméra vidéo est alors affichée sur une deuxième région de l'écran.

Avantageusement, l'aéronef est aussi équipé de moyens d'acquisition de paramètres, qui délivrent des informations aptes à être transmises à la station de commande par la liaison filaire, pour être affichées sur une troisième région de l'écran.

Ces informations délivrées par les moyens d'acquisition de paramètres comprennent l'une au moins des informations suivantes : l'assiette de l'aéronef, l'angle d'élévation de la caméra vidéo, le mode de transmission utilisé entre l'aéronef et la station de commande, la longueur de liaison filaire restante, et l'état d'au moins une source électrique autonome embarquée sur l'aéronef.

Lorsque les informations délivrées par les moyens d'acquisition de paramètres comprennent l'assiette de l'aéronef et l'angle d'élévation de la caméra vidéo, les deuxièmes moyens de calcul programmés affichent également sur la première région de l'écran un repère désignant l'emplacement de l'image vidéo affichée sur la deuxième région de l'écran. La position de ce repère par rapport à l'index est déterminée par les deuxièmes moyens de calcul programmés en fonction des valeurs de l'assiette et de l'angle d'élévation.

Les moyens indicateur de position et de vitesse, tels qu'un récepteur GPS (de l'anglais "Global Positioning System"), qui sont embarqués sur l'aéronef fournissent d'autres informations aptes à être transmises à la station de commande par voie hertzienne et par la liaison filaire, pour être affichées sur la troisième région de l'écran. Ces autres informations comprennent l'une au moins des informations suivantes : l'heure universelle, l'altitude de l'aéronef, la pente de la trajectoire suivie par l'aéronef et la vitesse de l'aéronef par rapport au sol.

Pour permettre d'effectuer une mesure différentielle améliorant la précision de la position et de la vitesse, la station de commande est avantageusement équipée de moyens indicateurs de position et de vitesse de référence tels qu'une station GPS de référence.

Dans la forme de réalisation préférentielle de l'invention, la liaison filaire est une liaison par fibre optique et comprend au moins une bobine embarquée sur l'aéronef.

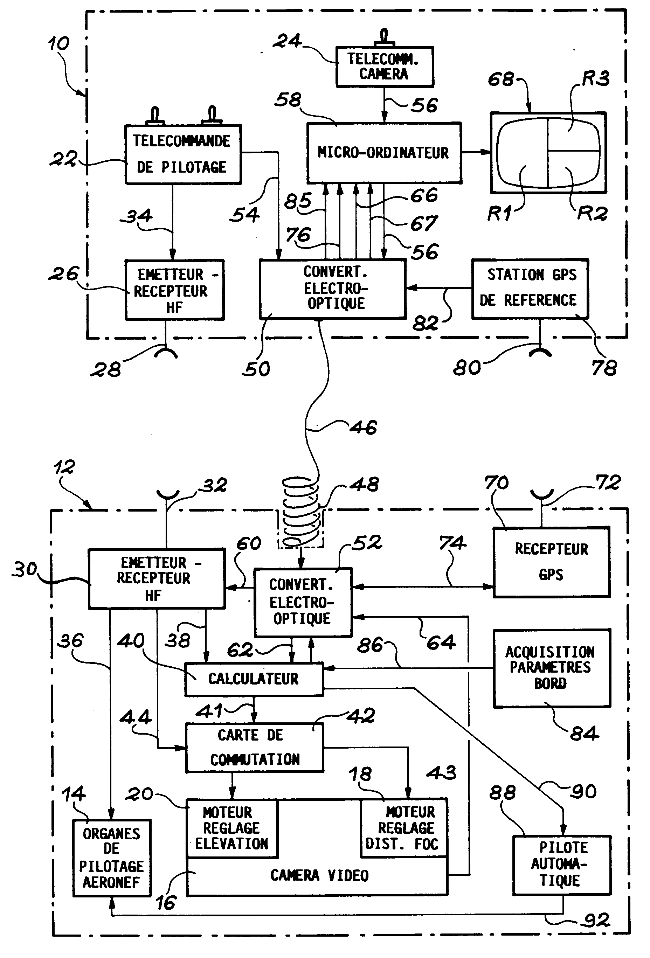

On décrira à présent, à titre d'exemple non limitatif, une forme de réalisation préférentielle de l'invention, en se référant au dessin annexé dans lequel la figure unique représente un schéma synoptique d'un système d'observation par aéronef télépiloté conforme à l'invention.

Le système d'observation selon l'invention comprend tout d'abord une station de commande désignée de façon générale par la référence 10 sur la figure. Cette station est le plus souvent située au sol, par exemple à bord d'un véhicule susceptible d'être amené à quelques dizaines de kilomètres de la région à observer. Il peut exceptionnellement être installé dans un emplacement différent, par exemple en mer sur un navire autorisant le décollage et l'atterrissage d'un avion léger télépiloté.

La station de commande 10 permet de piloter à distance un aéronef sans pilote 12, symbolisé par un rectangle sur la figure. Cet aéronef 12 est un aéronef léger, de petites dimensions, dont la structure et les dimensions peuvent être comparables à celles des aéronefs utilisés en aéromodélisme.

L'aéronef sans pilote 12 est équipé d'organes de pilotage 14. Ces organes de pilotage 14 incluent un ou plusieurs propulseurs ainsi que des gouvernes permettant de faire varier l'assiette (ou tangage), le cap (ou lacet) et le roulis de l'aéronef.

L'aéronef sans pilote 12 est également équipé de moyens d'observation comprenant une caméra vidéo 16 équipée d'un objectif à focale variable. Le réglage de la distance focale de l'objectif de la caméra 16 est commandé par un moteur 18.

La caméra vidéo 16 est montée sur l'aéronef sans pilote 12 par l'intermédiaire d'une plate-forme orientable en élévation. Le réglage de l'élévation est commandé par un moteur 20.

La commande des organes de pilotage 14 équipant l'aéronef 12 est assurée par des ordres de pilotage. De même, la commande des moteurs 18 de réglage de distance focale et 20 de réglage d'élévation, associés à la caméra vidéo 16 est assurée par des ordres de commande de ces moteurs. L'ensemble de ces ordres est émis depuis la station de commande 10.

A cet effet, la station de commande 10 est équipée de moyens de télécommande qui comprennent une télécommande 22 de pilotage de l'aéronef et une télécommande 24 des moteurs 18 et 20 de réglage de la caméra 16.

La télécommande 22 de pilotage est une télécommande analogue à celles qui sont utilisées en aéromodélisme. Elle comprend par exemple deux mini-manches deux axes, des curseurs linéaires ainsi que des commutateurs. A l'intérieur de cette télécommande 22, les ordres de pilotage sont multiplexés, puis numérisés et codés.

Les ordres élaborés dans la télécommande 22 de pilotage comprennent principalement des ordres de pilotage. Comme on le verra ultérieurement, ils comprennent aussi des ordres de commande des moteurs 18 et 20 de réglage de la caméra 16, lorsque la transmission entre la station de commande 10 et l'aéronef sans pilote 12 s'effectue par voie hertzienne.

Conformément à l'invention, les transmissions entre la station de commande 10 et l'aéronef sans pilote 12 peuvent s'effectuer à la fois par voie hertzienne et par une liaison filaire.

Afin d'assurer la transmission des différents signaux par voie hertzienne, la station de commande 10 est équipée de moyens 26 d'émission-réception HF pourvus d'une antenne 28. De façon comparable, l'aéronef sans pilote 12 est équipé de moyens 30 d'émission-réception HF munis d'une antenne 32.

Le système de transmission par voie hertzienne ainsi constitué est utilisé principalement pour transmettre aux organes de pilotage 14 et aux moteurs 18 et 20 de réglage de la caméra 16 respectivement des ordres de pilotage et des ordres de réglage de la caméra vidéo 16, issus de la télécommande 22.

Les moyens 26 d'émission-réception HF de la station de commande 10, qui peuvent dans la pratique être incorporés à la télécommande de pilotage 22, reçoivent les ordres élaborés par cette télécommande, comme le symbolise la liaison 34 sur la figure. Plus précisément, les ordres de pilotage émis par la télécommande de pilotage 22 sont toujours transmis aux moyens 26 d'émission-réception HF, quel que soit le mode de transmission utilisé entre la station de commande 10 et l'aéronef sans pilote 20. De plus, lorsque seule la transmission par voie hertzienne est utilisée, les ordres de commande des moteurs 18 et 20 de réglage de la caméra 16 sont également émis par la télécommande de pilotage 22 et transmis aux moyens 26 d'émission-réception HF par la liaison 34.

Lorsqu'ils sont reçus par l'antenne 32 des moyens 30 d'émission-réception HF embarqués sur l'aéronef sans pilote 12, les ordres en provenance de la station de commande 10 sont décodés, puis transmis aux organes de pilotage 14 de l'aéronef, comme on l'a illustré schématiquement par la liaison 36 sur la figure.

Les moyens 36 d'émission-réception HF qui équipent l'aéronef sans pilote 12 sont également reliés par une liaison illustrée schématiquement en 38 sur la figure, à des moyens de calcul constitués par un calculateur 40 embarqué sur l'aéronef. Le calculateur 40 est associé par une liaison 41 à une carte de commutation 42 (carte "switch") qui reçoit par ailleurs directement, par une liaison 44, les signaux décodés émis par les moyens 30 d'émission-réception HF.

Lorsque les transmissions entre la station de commande 10 et l'aéronef sans pilote 12 s'effectuent par voie hertzienne, ce qui est déterminé par le calculateur 40 à partir des signaux qui lui sont transmis par les moyens 30 d'émission-réception HF, les ordres de commande du moteur 18 de réglage de la distance focale sont produits à partir de signaux logiques émis par les moyens de calcul 40 et transmis par la carte de commutation 42 (liaison 43). Par ailleurs, le réglage de l'élévation de la caméra 16 est assuré par les ordres transmis directement au moteur 20 de réglage d'élévation, à travers la carte de commutation 42 (liaisons 44).

Il existe aussi, entre la station de commande 10 et l'aéronef sans pilote 12, une liaison filaire assurant une redondance des moyens de transmission pendant au moins une partie du vol de l'aéronef 12, comme on le verra ultérieurement.

Dans la forme de réalisation illustrée sur la figure, cette liaison filaire est assurée par une fibre optique 46 dont la majeure partie de la longueur est initialement enroulée sur une bobine 48 embarquée sur l'aéronef 12. Au fur et à mesure que l'aéronef sans pilote 12 s'éloigne de la station de commande 10, la fibre optique 46 se déroule de la bobine 48 en maintenant une liaison par fibre optique entre ces deux appareils.

L'extrémité de la fibre optique 46 raccordée sur la station de commande 10 est connectée sur un convertisseur électro-optique 50 appartenant à cette station. De façon comparable, l'autre extrémité de la fibre optique 46, sortant de la bobine 48, est raccordée sur un convertisseureur électro-optique 52 embarqué sur l'aéronef sans pilote 12.

Les convertisseurs électro-optiques 50 et 52 comprennent chacun une voie vidéo, une voie audio et trois voies de données numériques.

Comme l'illustre la liaison 54 sur la figure, le convertisseur électro-optique 50 de la station de commande 10 reçoit lui aussi le signal numérique émis par la télécommande de pilotage 22, et contenant les ordres de pilotage.

Le convertisseur électro-optique 50 reçoit aussi un signal numérique issu de la deuxième télécommande 24 et contenant des ordres de commande des moteurs de réglage 18 et 20 associés à la caméra 16. Cette télécommande 24, constituée par exemple d'un mini-manche deux axes et de deux boutons interrupteurs, est reliée au convertisseur électro-optique 50 par une liaison 56 incluant des moyens de calcul constitués par exemple par un micro-ordinateur 58.

A bord de l'aéronef sans pilote 12, les ordres de pilotage reçus par le convertisseur électro-optique 52 sont transmis au décodeur des moyens 30 d'émission-réception HF par une liaison 60.

Lorsque les ordres de commande parviennent au décodeur à la fois par voie hertzienne et par la liaison filaire formée par la fibre optique 46, il sélectionne automatiquement les ordres transmis par la liaison filaire pour les envoyer aux organes de pilotage 14 de l'aéronef par la liaison 36. Lorsqu'au contraire le décodeur des moyens 30 d'émission-réception HF ne reçoit des ordres de pilotage que par voie hertzienne, ce sont ces ordres de pilotage qu'il transmet aux organes de pilotage 14 par la liaison 36. Le décodeur des moyens 30 d'émission-réception HF constitue ainsi un moyen de commutation automatique du système, entre le mode de transmission par la liaison filaire et le mode de transmission par la voie hertzienne, selon que la liaison filaire est intacte ou rompue.

Par ailleurs, les ordres de commande des moteurs 18 et 20 de la caméra 16 qui parviennent au convertisseur électro-optique 52 embarqué sur l'aéronef sans pilote 12 sont transmis au calculateur 40 par une liaison 62.

La carte de commutation 42, reliée au calculateur 40 par la liaison 41, sélectionne les ordres de commande des moteurs- de réglage 18 et 20 de la caméra 16 selon le mode de transmission des signaux entre la station de commande 10 et l'aéronef sans pilote 12.

Plus précisément, tant que la liaison filaire constituée par la fibre optique 46 n'est pas rompue, le calculateur 40 qui reçoit par la liaison 38 une indication du mode de transmission choisie par le décodeur équipant les moyens 30 d'émission-réception HF, détermine à partir de cette information l'origine des ordres de commande transmis au moteur 18 et 20 de la caméra 16. Le calculateur 40 envoie ensuite à la carte de commutation 42, un signal permettant de sélectionner l'ordre qui doit être utilisé pour commander les moteurs 18 et 20.

Dans le cas où la fibre optique 46 n'est pas rompue, le calculateur 40 reçoit et décode les ordres qui lui sont transmis par la liaison 62, afin de commander les moteurs 18 et 20. Le calculateur 40 transmet à la carte de commutation 42 les signaux logiques correspondants qui permettent de choisir la mise en marche du moteur 18 de commande de réglage de la distance focale ainsi que son sens de rotation. Le calculateur 40 délivre en outre un signal modulé en largeur d'impulsion, qui permet de commander angulairement le moteur 20 de réglage de l'élévation de la caméra 16.

Lorsque la transmission s'effectue par voie hertzienne, les ordres de commande de réglage de la caméra 16 sont décodés dans les moyens 30 d'émission-réception HF et transmis au calculateur 40 par la liaison 38. Ce dernier délivre alors des signaux logiques permettant de commander le moteur 18 de réglage de distance focale et de transmettre directement l'ordre de commande du moteur 20 de réglage de l'élévation de la caméra depuis les moyens 30 d'émission-réception HF.

Comme l'illustre schématiquement la liaison 64 sur la figure, les signaux vidéo représentatifs de l'image observée par la caméra vidéo 16, ainsi qu'un signal audio, sont transmis au convertisseur électro-optique 52 afin d'être acheminés jusqu'à la station de commande 10 par la liaison filaire constituée par la fibre optique 46. Dans la station 10, ces signaux vidéo et audio sont reçus par le convertisseur électro-optique 50 qui les transfère au micro-ordinateur 58 par deux liaisons 66 et 67.

Le micro-ordinateur 58 est équipé d'un moniteur vidéo 68 qui forme des moyens de visualisation permettant à l'opérateur situé dans la station de commande 10 de contrôler en direct certaines informations en provenance de l'aéronef sans pilote 12. A cet effet, le moniteur vidéo 68 comporte un écran divisé en trois régions R1, R2 et R3.

La région R1 de l'écran du moniteur vidéo 68, qui correspond par exemple à environ la moitié de la surface de cet écran, permet à l'opérateur d'afficher une carte géographique d'une zone d'observation qui doit être survolée par l'aéronef 12. Cette carte géographique est choisie par l'opérateur parmi un ensemble de cartes géographiques préalablement mises en mémoire dans le micro-ordinateur 58. Ce dernier, superpose en outre à la carte géographique affichée sur la région R1 de l'écran du moniteur vidéo 68 un index indiquant la position de l'aéronef 12 et son sens de déplacement sur la carte géographique considérée. La position de cet index sur la carte géographique est déterminée par le micro-ordinateur 58 grâce à des informations de position en provenance de l'aéronef 12, comme on le verra par la suite.

Avantageusement, le micro-ordinateur 58 superpose également à la carte géographique affichée sur la région R1 de l'écran du moniteur vidéo 68 un repère présentant par exemple la forme d'un petit rectangle. Ce repère détermine sur la carte géographique l'emplacement des images vidéo transmises depuis la caméra vidéo 16 de l'aéronef. La position de ce repère est également déterminée par le micro-ordinateur 58 grâce à des informations en provenance de l'aéronef 12.

La deuxième région R2 de l'écran du moniteur vidéo 68, qui correspond par exemple à environ le quart de la surface de l'écran, sert à afficher l'image vidéo provenant de la caméra vidéo 16 embarquée sur l'aéronef 12. Il est à noter que les signaux vidéo délivrés par la caméra 16 sont transmis à la station de commande 10 par la liaison filaire constituée par la fibre optique 46.

La troisième région R3 de l'écran du moniteur vidéo 68, qui correspond aussi à environ un quart de la surface de cet écran, est utilisée pour afficher des paramètres de télémesure en provenance de l'aéronef 12, dont la nature sera précisée ultérieurement.

Afin de fournir en temps réel des informations concernant le positionnement et la vitesse de l'aéronef sans pilote 12 à la station de commande 10, l'aéronef est équipé d'un récepteur GPS 70 (de l'anglais "Global Positioning System"). Ce récepteur GPS 70, muni d'une antenne 72, délivre des signaux de positionnement de l'aéronef (latitude, longitude et altitude) ainsi que des signaux de vitesse de déplacement de l'aéronef par rapport au sol (vitesse horizontale, sens de déplacement, vitesse verticale). Ces signaux sont transmis par une liaison 74 au convertisseur électro-optique 52, afin d'être acheminés par la fibre optique 46 jusqu'à la station de commande 10. Ils sont alors transformés en signaux numériques par le convertisseur électro-optique 50, avant d'être transférés par une liaison 76 au micro-ordinateur 58. Ce dernier exploite les informations correspondantes pour déterminer la position de l'index représentatif de l'aéronef 12 et son sens de déplacement sur la région R1 de l'écran du moniteur vidéo 68. D'autres informations en provenance du récepteur GPS 70 sont directement affichées dans la région R3 de l'écran du moniteur vidéo 68. Il s'agit, dans la forme de réalisation décrite, de l'heure universelle, de la pente de la trajectoire suivie par l'aéronef 12, de l'altitude de cet aéronef et de sa vitesse de déplacement par rapport au sol.

Afin d'améliorer la précision des informations en provenance du récepteur GPS 70, la station de commande 10 est avantageusement équipée d'une station GPS de référence 78 pourvue d'une antenne 80. Les signaux de référence délivrés par cette station GPS 78 sont transmis par une liaison 82 au convertisseur electro-optique 50, pour permettre au micro-ordinateur 58 d'effectuer une mesure différentielle améliorant sensiblement la précision des informations de position.

Pour fournir à la station de commande 10 d'autres informations susceptibles d'être affichées dans la région R3 de l'écran du moniteur vidéo 68 ou d'être exploitées à d'autres fins par le micro-ordinateur 58, l'aéronef sans pilote 12 est également équipé de moyens 84 d'acquisition de paramètres de bord, ou moyens de télémesure. Les paramètres de bord acquis par les moyens 84 comprennent une indication du mode de transmission (voie hertzienne ou liaison filaire) entre l'aéronef 12 et la station de commande 10, une indication de l'état d'au moins une source électrique autonome telle qu'une batterie d'accumulateurs (non représentée), embarquée sur l'aéronef 12, la valeur de l'assiette de l'aéronef 12, la valeur de l'angle d'élévation de l'objectif de la caméra vidéo 16 et une indication de la longueur de la liaison filaire 46 restante, c'est-à-dire de la longueur de fibre optique non encore déroulée de la bobine 48.

Les moyens 84 d'acquisition des paramètres de bord délivrent des signaux qui sont transmis par une liaison 86 au calculateur 40 équipant l'aéronef 12. Ils y sont multiplexés, puis subissent une conversion analogique-numérique avant d'être transmis vers la station de commande 10 par la fibre optique 46. Une liaison 85 achemine les signaux représentatifs de ces paramètres jusqu'au micro-ordinateur 58. Tous ces paramètres sont affichés dans la région R3 de l'écran du moniteur vidéo 68.

L'indication fournie par les moyens d'acquisition 84 concernant la longueur de liaison filaire restante peut être une information fournie par un système de mesure en continu associé à la bobine 48 ou une information fournie par un système permettant de détecter le déroulement de longueurs déterminées de la fibre optique 46 à partir de cette bobine. Dans ce dernier cas, deux repères peuvent notamment être prévus afin d'avertir l'opérateur situé dans la station de commande 10 par exemple lorsque la moitié de la fibre optique 46 est déroulée de la bobine 48 et lorsque les 3/4 de la longueur de la fibre 46 sont déroulés de la bobine 48.

Les valeurs de l'angle d'élévation de l'axe de l'objectif de la caméra vidéo 16 et de l'assiette de l'aéronef 12, fournies par les moyens d'acquisition 84 sont exploitées par le micro-ordinateur 58 de la station de commande 10, afin de déterminer la position du repère correspondant à l'emplacement de l'image vidéo provenant de la caméra, sur la carte géographique affichée dans la région R1 de l'écran du moniteur vidéo 68.

Enfin et comme l'illustre également la figure, l'aéronef sans pilote 12 est équipé de moyens de pilotage automatique 88 reliés au calculateur 40 par une liaison 90. Ces moyens de pilotage automatique 88 comprennent notamment un capteur de pression (non représenté) permettant de stabiliser l'aéronef en altitude et un gyromètre de roulis (non représenté) permettant de stabiliser l'aéronef en lacet. Lorsque ces moyens de pilotage automatique 88 sont actionnés, ils assurent donc un déplacement de l'aéronef sensiblement en ligne droite et à altitude constante en agissant directement sur les organes de pilotage 14 par une liaison 92. Le calculateur 40 assure cependant une correction de la trajectoire en lacet, en utilisant les-informations de position délivrées en permanence par le récepteur GPS 70 et en les comparant à la position de départ de l'aéronef, qui correspond à la position de la station de commande 10, mémorisée dans le calculateur 40 avant le décollage.

La mise en oeuvre des moyens de pilotage automatique 88 est assurée de façon programmée par le calculateur 40 dès qu'une information de rupture de la fibre optique 46 relevée par le décodeur des moyens 30 d'émission-réception HF parvient à ce calculateur 40.

La mise en oeuvre du système d'observation conforme à l'invention va à présent être exposée brièvement.

Lorsqu'une mission d'observation est initiée, l'aéronef sans pilote 12 est relié à sa station de commande 10 par la fibre optique 46. Lorsque l'opérateur commande le décollage de l'aéronef 12 et le dirige vers son objectif au moyen de la télécommande de pilotage 22, les ordres de pilotage issus de cette télécommande sont transmis à la fois par voie hertzienne et par la fibre optique 46. Cependant, le décodeur des moyens 30 d'émission-réception HF équipant l'aéronef 12 ne transmet aux organes de pilotage 14 de ce dernier que les ordres qui ont cheminé par la fibre optique. Cette première phase de pilotage se poursuit tant que la fibre optique 46 n'est pas rompue, c'est-à-dire tant que la totalité de la fibre optique n'est pas déroulée de la bobine 48. La zone d'observation peut ainsi être survolée sans risque que les transmissions d'informations depuis l'aéronef vers la station de commande 10 soient interrompues par des accidents de terrain ou par un brouillage. De plus, la portée du système d'information est égale à sensiblement toute la longueur de la fibre optique 46 stockée initialement dans la bobine 48.

Pendant cette première phase, qui correspond à l'exécution de la mission d'observation, au cours de laquelle les transmissions entre l'aéronef et la station de commande s'effectuent par la fibre optique 46, les images fournies par la caméra vidéo 16 sont transmises par cette même fibre jusqu'à la station de commande 10 où elles sont affichées sur la région R2 de l'écran du moniteur vidéo 68. L'élévation de la caméra 16 ainsi que sa distance focale sont réglés à volonté en agissant sur les moyens de télécommande 24 des moteurs 18 et 20.

De même, les informations de position et de vitesse fournies par le récepteur GPS 70, ainsi que les différents paramètres délivrés par les moyens d'acquisition 84 sont également transmis à la station des commande 10 par la fibre optique 46, ce qui permet au micro-ordinateur 58 d'afficher sur la région R1 de l'écran du moniteur vidéo 68 l'index indiquant la position et la vitesse de l'aéronef ainsi que le repère indiquant l'emplacement de la zone apparaissant sur l'image affichée dans la région R2. Le micro-ordinateur 58 affiche en outre dans la région R3 de l'écran du moniteur vidéo 68 les différentes informations en provenance du récepteur GPS 70 et des moyens d'acquisition 84, dont la liste à été donnée précédemment.

Lorsqu'une information indiquant que la majeure partie de la longueur de la fibre optique 46 est déroulée de la bobine 48, s'affiche dans la région R3 de l'écran du moniteur vidéo 68, l'opérateur agit sur la télécommande de pilotage 22, afin d'amener l'aéronef 12 dans des conditions favorables à son retour vers la station de commande 10. A cet effet, il peut notamment lui faire prendre de l'altitude et lui faire suivre un cap le conduisant vers la station.

Dès que la fibre optique 46 se rompt, le décodeur des moyens 30 d'émission-réception HF embarqué sur l'aéronef 12 détecte cette rupture et transmet aux organes de pilotage 14 les signaux reçus par la voie hertzienne, lorsque ces signaux existent. Cependant, il est à noter que la portée des moyens 26 et 30 d'émission-réception HF équipant la station de commande 10 et l'aéronef 12 est de préférence limitée à l'environnement immédiat de la station de commande et, par conséquent, très inférieure à la portée permise par la fibre optique 46 lorsqu'elle est totalement déroulée.

Au début de ce deuxième mode de fonctionnement du système d'observation selon l'invention, les actions exercées sur la télécommande de pilotage 22 sont donc généralement sans effet sur les organes de pilotage 14 de l'aéronef. Cette caractéristique, qui permet d'éviter un repérage électromagnétique de l'aéronef dans la zone d'observation, est toutefois sans conséquence sur la récupération de l'aéronef. En effet, la détection de la rupture de la fibre optique 46 par le décodeur des moyens 30 d'émission-réception HF se traduit immédiatement par l'activation des moyens de pilotage automatique 88 commandés par le calculateur 40.

Etant donné que l'opérateur a été averti de l'éminence de la rupture de la fibre optique suffisamment à l'avance pour placer l'aéronef 12 dans des conditions de retour favorables, ce retour peut être exécuté sans difficulté par les moyens de pilotage automatique 88. jusqu'à proximité immédiate de la station de commande 10.

Lorsque l'aéronef 12 arrive au voisinage de la station de commande, la portée des moyens 26 et 30 d'émission-réception HF permet à l'opérateur de reprendre le pilotage à distance, toujours en agissant sur la télécommande de pilotage 22. Les ordres de pilotage, qui sont alors transmis par voie hertzienne, agissent sur les organes de pilotage 14 de la même manière que lorsqu'ils étaient transmis par la fibre optique 46. Cette troisième phase permet donc à l'opérateur de piloter à distance l'atterrissage de l'aéronef à proximité immédiate de la station de commande. A cet effet, il peut profiter des images vidéo transmises par voie hertzienne, corrigées en agissant sur les moteurs 18 et 20 par la télécommande 22.

Il est à noter que les trois phases de fonctionnement qui viennent d'être décrites ne sont pas impérativement utilisées pour toutes les missions. Ainsi, si la distance de la zone d'observation est suffisamment faible, les transmissions peuvent être effectuées en totalité par la fibre optique 46 du décollage de l'aéronef jusqu'à son atterrissage. Les moyens de pilotage automatique 88 ne sont alors pas actionnés. De même, si les ordres de pilotage transitent également par voie hertzienne, dans la limite de portée des moyens 26 et 30 d'émission-réception HF, ce mode de transmission par voie hertzienne assure alors simplement une redondance de la transmission qui n'est utilisée qu'en cas de cassure accidentelle de la fibre optique 46.

Si le système d'observation décrit est équipé d'une liaison filaire par fibre optique, on comprendra qu'il pourrait aussi fonctionner à l'aide d'une liaison filaire de nature différente, utilisant par exemple un fil de transmission de signaux électriques.

## Revendications

1. **.** Système d'observation par aéronef télépiloté, comprenant :
- un aéronef sans pilote (12), équipé de moyens d'observation (16), de moyens de pilotage (14), et de premiers moyens d'émission-réception (30) par voie hertzienne ; et
- une station de commande (10), équipée de moyens de visualisation (68), de moyens de télécommande (22,24), et de deuxièmes moyens d'émission-réception (26) par voie hertzienne ;
caractérisé par le fait qu'il comprend de plus une liaison filaire (46) reliant initialement l'aéronef (12) à la station de commande (10) pour transmettre normalement aux moyens de pilotage (14) de l'aéronef des ordres de pilotage délivrés par les moyens de télécommande (22,24) qui équipent la station de commande.

2. Système selon la revendication 1, caractérisé par le fait que l'aéronef (12) est équipé de moyens de commutation automatique (30) qui transmettent aux moyens de pilotage (14) des ordres de pilotage délivrés par les moyens de télécommande (22,24), respectivement au travers de la liaison filaire (46) lorsque cette liaison est intacte, et par voie hertzienne lorsque la liaison filaire est rompue.

3. Système selon l'une quelconque des revendications précédentes, caractérisé par le fait que l'aéronef (12) est équipé de premiers moyens de calcul programmés (40) qui enclenchent automatiquement des moyens de pilotage automatique (88) lorsque la liaison filaire (46) est rompue, de façon à assurer un retour programmé de l'aéronef vers la station de commande (10).

4. Système selon les revendications 2 et 3 combinées, caractérisé par le fait que les premier et deuxième moyens d'émission-réception (26,30) par voie hertzienne ont une portée sensiblement inférieure à une longueur maximale de la liaison filaire (46), de façon à permettre un atterrissage de l'aéronef (12) télécommandé par voie hertzienne.

5. Système selon l'une quelconque des revendications 3 et 4, caractérisé par le fait que les moyens de pilotage automatique (88) agissent sur les moyens de pilotage (14) de façon à assurer une stabilisation de l'aéronef (12) en altitude et en cap, et de façon à assurer une correction automatique de trajectoire en cap, en réponse à des informations de position délivrées par des moyens (70) indicateurs de position et de vitesse, embarqués sur l'aéronef.

6. Système selon la revendication 5, caractérisé par le fait qu'il comprend des moyens de détection d'une longueur de liaison filaire restante, délivrant une information de longueur restante transmise aux moyens de visualisation (68) pour y être affichée, cette information de longueur restante permettant à un opérateur d'orienter l'aéronef (12) vers la station de commande (10), à l'aide des moyens de télécommande (22), avant une rupture de la liaison filaire (46).

7. Système selon l'une quelconque des revendications précédentes, caractérisé par le fait qu'il comprend des moyens (30) de détection d'une rupture de la liaison filaire (46).

8. Système selon l'une quelconque des revendications précédentes, caractérisé par le fait que les moyens d'observation comprennent une caméra vidéo (16) délivrant une image vidéo, cette caméra étant équipée de moyens de réglage de distance focale (18) et de moyens de réglage d'élévation (20), les moyens de télécommande (22,24) délivrant de plus des ordres de commande de ces moyens de réglage de distance focale et d'élévation, aptes à être transmis par voie hertzienne et par la liaison filaire (46).

9. Système selon la revendication 8, caractérisé par le fait que les moyens de visualisation comprennent alors un moniteur vidéo (68) pourvu d'un écran partagé en au moins deux régions (R1,R2,R3), et des deuxièmes moyens de calcul programmés (58), associés au moniteur vidéo, dans lesquels peut être mémorisée au moins une carte géographique d'une zone d'observation à survoler, cette carte étant apte à être affichée sur une première (R1) desdites régions, avec un index indiquant la position de l'aéronef (12), l'image vidéo fournie par la caméra vidéo (16) étant apte à être affichée sur une deuxième (R2) desdites régions.

10. Système selon la revendication 9, caractérisé par le fait que l'aéronef est équipé de moyens d'acquisition (84) de paramètres, délivrant des informations aptes à être transmises à la station de commande (10) par voie hertzienne et par la liaison filaire (46), pour être affichées sur une troisième (R3) desdites régions.

11. Système selon la revendication 10, caractérisé par le fait que les informations délivrées par les moyens d'acquisition (84) de paramètres comprennent l'une au moins des informations suivantes : l'assiette de l'aéronef (12), l'angle d'élévation de la caméra vidéo (16), le mode de transmission utilisé entre l'aéronef et la station de commande (10), la longueur de liaison filaire (46) restante, et l'état d'au moins une source électrique autonome embarquée sur l'aéronef.

12. Système selon la revendication 11, caractérisé par le fait que, les informations délivrées par les moyens d'acquisition (84) de paramètres comprenant l'assiette de l'aéronef (12) et l'angle d'élévation de la caméra vidéo (16), les deuxièmes moyens de calcul programmés (58) affichent également sur la première région (R1) de l'écran un repère désignant l'emplacement de l'image vidéo affichée sur la deuxième région la position de ce repère par rapport à l'index étant déterminée en fonction des valeurs de l'assiette et de l'angle d'élévation.

13. Système selon l'une quelconque des revendications 10 à 12, combinée avec l'une quelconque des revendications 5 et 6, caractérisé par le fait que les moyens (70) indicateurs de position et de vitesse fournissent d'autres informations aptes à être transmises à la station de commande (10) par voie hertzienne et par la liaison filaire (46), pour être affichées sur la troisième région de l'écran, ces autres informations comprenant l'une au moins des informations suivantes : l'heure universelle, l'altitude de l'aéronef (12), la pente de la trajectoire suivie par l'aéronef et la vitesse de l'aéronef par rapport au sol.

14. Système selon la revendication 13, caractérisé par le fait que la station de commande (10) est équipée de moyens de référence (78) indicateurs de position et de la vitesse.

15. Système selon l'une quelconque des revendications précédentes, caractérisé par le fait que la liaison filaire est une liaison par fibre optique (46).

16. Système selon l'une quelconque des revendications précédentes, caractérisé par le fait que la liaison filaire comprend au moins une bobine (48) embarquée sur l'aéronef (12).

## Claims

1. System for observation by remotely piloted aircraft, comprising:
- a pilotless aircraft (12) equipped with observation means (16), pilotage means (14), and first radio-relay transmit-receive means (30); and
- a control station (10) equipped with display means (68), remote control means (22, 24), and second radio-relay transmit-receive means (26);
characterized in that it furthermore comprises a wire-like link (46) initially connecting the aircraft (12) to the control station (10) so as normally to transmit, to the aircraft pilotage means (14), pilotage commands delivered by the remote control means (22, 24) with which the control station is equipped.

2. System according to Claim 1, characterized in that the aircraft (12) is equipped with automatic switching means (30) which transmit, to the pilotage means (14), pilotage commands delivered by the remote control means (22, 24), respectively via the wire-like link (46) when this link is intact, and by radio relay when the wire-like link is broken.

3. System according to any one of the preceding claims, characterized in that the aircraft (12) is equipped with first programmed computing means (40) which automatically trigger automatic pilotage means (88) when the wire-like link (46) is broken, so as to ensure a programmed return of the aircraft to the control station (10).

4. System according to Claims 2 and 3 combined, characterized in that the first and second radio-relay transmit-receive means (26, 30) have a range which is substantially less than a maximum length of the wire-like link (46), so as to allow the landing of the aircraft (12) remotely controlled by radio relay.

5. System according to either one of Claims 3 and 4, characterized in that the automatic pilotage means (88) act on the pilotage means (14) in such a way as to stabilize the aircraft (12) in terms of altitude and heading, and in such a way as to ensure automatic correction of trajectory in terms of heading, in response to position information delivered by position and speed indicating means (70) carried on board the aircraft.

6. System according to Claim 5, characterized in that it comprises means for detecting a remaining length of wire-like link, delivering a remaining length cue transmitted to the display means (68) so as to be displayed there, this remaining length cue enabling an operator to steer the aircraft (12) towards the control station (10), with the aid of the remote control means (22), before a breakage of the wire-like link (46).

7. System according to any one of the preceding claims, characterized in that it comprises means (30) for detecting a breakage of the wire-like link (46).

8. System according to any one of the preceding claims, characterized in that the observation means comprise a video camera (16) which delivers a video image, this camera being equipped with focal-length adjusting means (18) and with elevation adjusting means (20), the remote control means (22, 24) furthermore delivering commands for controlling these focal-length and elevation adjusting means, which are able to be transmitted by radio relay and by the wire-like link (46).

9. System according to Claim 8, characterized in that the display means thus comprise a video monitor (68) provided with a screen split into at least two regions (R1, R2, R3), and second programmed computing means (58), associated with the video monitor, and in which at least one geographical map of an observation zone to be overflown can be stored, this map being able to be displayed on a first (R1) of the said regions, with an index indicating the position of the aircraft (12), the video image delivered by the video camera (16) being able to be displayed on a second (R2) of the said regions.

10. System according to Claim 9, characterized in that the aircraft is equipped with parameter acquisition means (84) delivering information able to be transmitted to the control station (10) by radio relay and by the wire-like link (46), so as to be displayed on a third (R3) of the said regions.

11. System according to Claim 10, characterized in that the information delivered by the parameter acquisition means (84) comprises one at least of the following items of information: the trim of the aircraft (12), the angle of elevation of the video camera (16), the mode of transmission used between the aircraft and the control station (10), the remaining length of wire-like link (46), and the state of at least one self-contained electrical source carried on board the aircraft.

12. System according to Claim 11, characterized in that the information delivered by the parameter acquisition means (84) comprising the trim of the aircraft (12) and the angle of elevation of the video camera (16), the second programmed computing means (58) also display on the first region (R1) of the screen a tag designating the location of the video image displayed on the second region, the position of this tag with respect to the index being determined as a function of the values of the trim and of the angle of elevation.

13. System according to any one of Claims 10 to 12, combined with either one of Claims 5 and 6, characterized in that the position and speed indicating means (70) deliver other information which can be transmitted to the control station (10) by radio relay and by the wire-like link (46) so as to be displayed on the third region of the screen, this other information comprising one at least of the following items of information: the universal time, the altitude of the aircraft (12), the slope of the trajectory followed by the aircraft and the speed of the aircraft relative to the ground,

14. System according to Claim 13, characterized in that the control station (10) is equipped with position and speed indicating reference means (78).

15. System according to any one of the preceding claims, characterized in that the wire-like link is an optical fibre link (46).

16. System according to any one of the preceding claims, characterized in that the wire-like link comprises at least one coil (48) carried on board the aircraft (12).

## Patentansprüche

1. Beobachtungssystem, ausgerüstet mit einem ferngelenkten Flugzeug, umfassend:
- ein Flugzeug (12) ohne Pilot, ausgestattet mit Beobachtungseinrichtungen (16), Lenkeinrichtungen (14) und ersten SenderEmpfänger-Funkeinrichtungen (30); und
- eine Steuerstation (10), ausgestattet mit Anzeigeeinrichtungen (68), Fernlenkeinrichtungen (22,24) und zweiten Sender-Empfänger-Funkeinrichtungen (26);
**dadurch gekennzeichnet,**
daß es zudem eine Faser- bzw. Filamentverbindung (46) umfaßt, die anfangs das Flugzeug (12) mit der Steuerstation (10) verbindet, um normalerweise an die Lenkeinrichtungen (14) des Flugzeugs Lenkbefehle zu übertragen, die durch die Fernlenkeinrichtungen (22,24) geliefert werden, mit denen die Steuerstation ausgerüstet ist.

2. System nach Anspruch 1, dadurch gekennzeichnet, daß das Flugzeug (12) mit automatischen Umschalteinrichtungen (30) ausgerüstet ist, die durch die Fernlenkeinrichtungen (22,24) an die Lenkeinrichtungen (14) gelieferte Lenkbefehle über die Filamentverbindung (46) übertragen, wenn diese Verbindung intakt ist, beziehungsweise über Funk, wenn die Filamentverbindung gerissen ist.

3. System nach einem der vorangehenden Ansprüche, dadurch gekennzeichnet, daß das Flugzeug (12) mit ersten programmierten Recheneinrichtungen (40) ausgerüstet ist, die automatisch automatische Lenkeinrichtungen (88) einschalten, wenn die Filamentverbindung (46) gerissen ist, um eine programmierte Rückkehr des Flugzeugs zu der Steuerstation (10) zu gewährleisten.

4. System nach einem der Ansprüche 2 und 3, dadurch gekennzeichnet, daß die erste und die zweite Sender-Empfänger-Funkeinrichtungen (26,30) eine wesentlich kleinere Reichweite haben als eine Maximallänge der Filamentverbindung (46), um eine Landung des ferngelenkten Flugzeugs (12) zu ermöglichen.

5. System nach einem der Ansprüche 3 und 4, dadurch gekennzeichnet, daß die automatischen Lenkeinrichtungen (88) auf die Lenkeinrichtungen (14) derart einwirken, daß eine Höhen- und Kursstabilisierung des Flugzeugs (12) gewährleistet ist, und derart, daß eine automatische Kurskorrektur als Reaktion auf Positionsinformationen gewährleistet ist, die durch Positions- und Geschwindigkeitsangabe-Einrichtungen (70) geliefert werden, die sich an Bord des Flugzeugs befinden.

6. System nach Anspruch 5, dadurch gekennzeichnet, daß es Detektionseinrichtungen einer Filamentverbindungs-Restlänge umfaßt, die eine Restlängeninformation an die Anzeigeeinrichtungen (68) liefern, die dort sichtbar gemacht wird, wobei diese Information bezüglich der Restlänge einem Operator ermöglicht, das Flugzeug (12) vor einem Reißen der Filamentverbindung (46) mit Hilfe der Fernlenkeinrichtungen (22) in Richtung Steuerstation (10) zu drehen bzw. zu steuern.

7. System nach einem der vorangehenden Ansprüche, dadurch gekennzeichnet, daß es Einrichtungen zur Detektion eines Reißens der Filamentverbindung (46) umfaßt.

8. System nach einem der vorangehenden Ansprüche, dadurch gekennzeichnet, daß die Beobachtungseinrichtungen eine Videokamera (16) umfassen, die ein Videobild liefert, wobei diese Kamera mit Brennweitenregelungseinrichtungen (18) und Elevationsregelungseinrichtungen (20) ausgerüstet ist, und die Fernlenkeinrichtungen (22,24) zudem Steuerbefehle dieser Brennweiten- und Elevationsregelungseinrichtungen liefern, die über Funk und über die Filamentverbindung (46) übertragen werden können.

9. System nach Anspruch 8, dadurch gekennzeichnet, daß die Anzeigeeinrichtungen dann einen Videomonitor (68) umfassen, versehen mit einem in wenigstens zwei Bereiche (R1,R2,R3) unterteilten Bildschirm, und zweite programmierte, mit dem Videomonitor verbundene Recheneinrichtungen (58), in denen wenigstens eine geographische Karte einer zu überfliegenden Beobachtungszone abgespeichert werden kann, wobei diese Karte in einem ersten (R1) der genannten Bereiche angezeigt werden kann, mit einem Zeiger, der die Position des Flugzeugs (12) angibt, und das durch die Videokamera (16) gelieferte Videobild in einem zweiten (R2) der genannten Bereiche angezeigt werden kann.

10. System nach Anspruch 9, dadurch gekennzeichnet, daß das Flugzeug mit Parametererfassungseinrichtungen (84) ausgerüstet ist, die Informationen liefern, die über Funk und über die Filamentverbindung (46) zur Steuerstation (10) übertragen werden können, um in dem dritten (R3) der genannten Bereiche angezeigt zu werden.

11. System nach Anspruch 10, dadurch gekennzeichnet, daß die Parametererfassungseinrichtungen (84) wenigstens eine der folgenden Informationen umfassen: die Trimmlage des Flugzeugs (12), den Elevationswinkel der Videokamera (16), die zwischen dem Flugzeug und der Steuerstation (10) benutzte Übertragungsart, die Restlänge der Filamentverbindung (46) und den Zustand von wenigstens einer an Bord des Flugzeugs befindlichen autonomen elektrischen Quelle.

12. System nach Anspruch 11, dadurch gekennzeichnet, daß die durch die Parametererfassungseinrichtungen (84) gelieferten Informationen die Trimmlage des Flugzeugs (12) und den Elevationswinkel der Videokamera (16) umfassen, und die zweiten programmierten Recheneinrichtungen (58) auch in dem ersten Bereich (R1) des Schirms einen Bezugspunkt sichtbar machen, der den Ort bzw. die Stelle des in dem zweiten Bereich sichtbar gemachten Videobilds anzeigt, wobei die Position dieses Bezugspunkts in bezug auf den Zeiger in Abhängigkeit von den Werten der Trimmlage und des Elevationswinkel festgelegt wird.

13. System nach einem der Ansprüche 10 bis 12, kombiniert mit einem der Ansprüche 5 und 6, dadurch gekennzeichnet, daß die Positions- und Geschwindigkeitsangabeeinrichtungen (70) weitere Informationen liefern, die über Funk und über die Filamentverbindung (46) zur Steuerstation (10) übertragen werden können, um im dritten Bereich des Schirms angezeigt zu werden, wobei diese weiteren Informationen wenigstens eine der folgenden Informationen enthalten: die Universalzeit, die Höhe des Flugzeugs (12), die Neigung der Flugbahn des Flugzeugs und die Geschwindigkeit des Flugzeugs in bezug auf den Boden.

14. System nach Anspruch 13, dadurch gekennzeichnet, daß die Steuerstation (10) mit Positions- und Geschwindigkeitsangabe-Bezugseinrichtungen (78) ausgerüstet ist.

15. System nach einem der vorangehenden Ansprüche, dadurch gekennzeichnet, daß die Filamentverbindung eine Verbindung durch eine optische Faser (46) ist.

16. System nach einem der vorangehenden Ansprüche, dadurch gekennzeichnet, daß die Filamentverbindung wenigstens eine durch das Flugzeug (48) mitgeführte Spule (48) umfaßt.
